# EUROPÄISCHE PATENTANMELDUNG

(11) **EP 2 369 089 A1**
(43) Veröffentlichungstag der Anmeldung: **28.09.2011**
(21) Anmeldenummer: 10156351.8
(22) Anmeldetag: 12.03.2010
(51) Int. Cl.: E04F 13/08, F16B 37/00

(54) **Verbindungseinrichtung zur Verbindung einer Wand mit einem Fassadenelement oder mit einem Fassadenelementhalter**

(71) Anmelder: Reinwarth Patentverwaltung GbR, 70771 Leinfelden-Echterdingen (DE)
(72) Erfinder: Reinwarth, Klaus, 70771 Leinfelden-Echterdingen (DE); Reinwarth, Klaus-Peter, 70771 Leinfelden-Echterdingen (DE)
(74) Vertreter: Dreiss

(57) **Zusammenfassung**

Verbindungseinrichtung (50) zur Verbindung einer Wand (52) mit einem Fassadenelement (56) oder mit einem Fassadenelementhalter (54), umfassend einen Grundkörper (10), welcher ein Fußteil (12) mit mindestens einer Anlagefläche (20) zur Anlage gegen eine Wandfläche (78) und mit mindestens einem Befestigungsabschnitt (24, 26) zur Befestigung des Fußteils (12) an der Wand (52) aufweist, und welcher einen von dem Fußteil abragenden Kopfteil (22) aufweist, wobei der Kopfteil (22) mindestens einen Aufnahmebereich (40) zur Aufnahme einer in den Aufnahmebereich (40) einschraubbaren oder eingeschraubten Stange (64) aufweist, welche mit dem Fassadenelement (56) oder dem Fassadenelementhalter (54) verbunden oder verbindbar ist.

## Beschreibung

### Beschreibung

Die Erfindung betrifft eine Verbindungseinrichtung zur Verbindung einer Wand mit einem Fassadenelement oder mit einem Fassadenelementhalter, umfassend einen Grundkörper, welcher ein Fußteil mit mindestens einer Anlagefläche zur Anlage gegen eine Wandfläche und mit mindestens einem Befestigungsabschnitt zur Befestigung des Fußteils an der Wand aufweist, und welcher einen von dem Fußteil abragenden Kopfteil aufweist.

Aus der EP 1 236 840 B1 ist ein längliches Rückhalteelement für Baubleche bekannt, welches einen Kopfteil aufweist, der in übereinander angeordnete Flansche von nebeneinander angeordneten Baublechen eingreift.

Hiervon ausgehend liegt der vorliegenden Erfindung die Aufgabe zugrunde, eine möglichst einfache Verbindungseinrichtung zur Verbindung einer Wand mit einem Fassadenelement oder mit einem Fassadenelementhalter zu schaffen, welche eine möglichst flexible Montage eines Fassadenelements oder eines Fassadenelementhalters ermöglicht.

Diese Aufgabe wird bei einer Verbindungseinrichtung der eingangs genannten Art dadurch gelöst, dass der Kopfteil mindestens einen Aufnahmebereich zur Aufnahme einer in den Aufnahmebereich einschraubbaren oder eingeschraubten Stange aufweist, welche mit dem Fassadenelement oder dem Fassadenelementhalter verbunden oder verbindbar ist.

Die erfindungsgemäße Verbindungseinrichtung ermöglicht es, eine sehr einfach aufgebaute, flexibel nutzbare Verbindung zwischen einer Wand und einem Fassadenelement oder einem Fassadenelementhalter zu schaffen. Durch Auswahl der Länge einer Stange kann das Maß bestimmt werden, mit welchem ein Fassadenelementhalter oder ein Fassadenelement zu einer Wand beabstandet ist. Für verschiedene Stangen kann derselbe Grundkörper verwendet werden, welcher mit seinem Aufnahmebereich eine stabile Verankerungsmöglichkeit eines Endes der Stange schafft. Das gegenüberliegende freie Ende der Stange, welches nicht in den Aufnahmebereich des Grundkörpers eingeschraubt ist, bildet einen Verbindungsabschnitt zur Verbindung mit dem Fassadenelement oder mit einem Fassadenelementhalter.

Im Rahmen der Erfindung wird unter einem Fassadenelement ein Bauteil verstanden, welches von außen sichtbar ist und eine flächige Verkleidung einer Wand ermöglicht. Solche Fassadenelemente können beispielsweise aus Glas-, Metall-, Holz- oder Kunststoffmaterialien hergestellt sein.

Unter einem Fassadenelementhalter wird ein Bauelement oder eine Gruppe von Bauteilen verstanden, welches oder welche eine Verbindung zwischen einem Fassadenelement und einer in den Aufnahmebereich des Grundkörpers eingeschraubten Stange schafft.

Der erfindungsgemäße Aufbau der Verbindungseinrichtung hat den Vorteil, dass der Grundkörper für verschiedenartige Stangen universell einsetzbar ist. Insbesondere ist es nicht erforderlich, die Geometrie des Grundkörpers, insbesondere des Kopfteils des Grundkörpers, exakt an die Geometrie eines möglicherweise an einem Fassadenelement ausgebildeten Flansches anzupassen.

Bei einer bevorzugten Ausführungsform der Erfindung ist vorgesehen, dass der Aufnahmebereich mit einem Innengewinde versehen ist. Dies ermöglicht eine schnelle und einfache Verbindung von Grundkörper und Stange.

Bei einer weiteren Ausführungsform ist vorgesehen, dass der Aufnahmebereich Materialabschnitte zum Einschneiden eines Innengewindes mittels eines Außengewindes der Stange aufweisen. Dies ermöglicht einen besonders festen Halt der Stange in dem Aufnahmebereich. Bei dem Außengewinde der Stange handelt es sich vorzugsweise um ein selbstschneidendes Gewinde, welches die Materialabschnitte des Aufnahmebereichs zerschneidet.

In entsprechender Weise ist es vorteilhaft, wenn in die Materialabschnitte mittels des Außengewindes der Stange ein Innengewinde eingeschnitten ist. Dies ermöglicht die Bereitstellung einer stabilen Baugruppe aus Grundkörper und Stange.

Nach einer weiteren Ausführungsform der Erfindung ist vorgesehen, dass der Aufnahmebereich einen von dem Grundkörper separat bereitgestellten Gewindeeinsatz umfasst. Dieser Gewindeeinsatz kann entweder ein Innengewinde umfassen, wodurch ein besonders schnelles und einfaches Einschrauben einer Stange ermöglicht wird, oder der Gewindeeinsatz umfasst Materialabschnitte, in welche in vorstehend beschriebener Weise ein Innengewinde einschneidbar ist.

Bevorzugt ist es, wenn der Gewindeeinsatz zumindest abschnittsweise, insbesondere vollständig, von dem Material, aus dem Grundkörper hergestellt ist, umschlossen ist. Dies ist besonders vorteilhaft, wenn der Gewindeeinsatz aus einem metallischen Material hergestellt ist und der Grundkörper urformend hergestellt ist. Dies ermöglicht eine besonders einfache und preiswerte Herstellung der Verbindungseinrichtung.

Bei einer bevorzugten Ausführungsform der Erfindung ist vorgesehen, dass zumindest alle Bereiche des Grundkörpers außerhalb des Aufnahmebereichs (insbesondere der gesamte Grundkörper einschließlich des Aufnahmebereichs) aus einem Kunststoffmaterial hergestellt sind, beispielsweise aus Polyamid. Das Kunststoffmaterial kann mit Zusatzstoffen verstärkt sein, beispielsweise mit (Glas-) Fasern. Insbesondere ist der Grundkörper im Spritzgussverfahren hergestellt.

Alternativ hierzu sind zumindest alle Bereiche des Grundkörpers außerhalb des Aufnahmebereichs (insbesondere der gesamte Grundkörper einschließlich des Aufnahmebereichs) aus einem metallischen Material hergestellt, beispielsweise aus einem Metallschaum, vorzugsweise aus einem geschäumten Aluminium. Insbesondere ist der Grundkörper urformend in einem Gussverfahren hergestellt.

Alternativ hierzu sind zumindest alle Bereiche des Grundkörpers außerhalb des Aufnahmebereichs aus einem Sinterwerkstoff hergestellt, beispielsweise aus einer Keramik. Auch dieser Werkstoff lässt sich urformend und somit preiswert verarbeiten.

Ferner ist es bevorzugt, wenn der Aufnahmebereich aus einem Kunststoffmaterial hergestellt ist. Dies ermöglicht es insbesondere, den gesamten Grundkörper aus einem Kunststoffmaterial herzustellen, insbesondere wenn der Aufnahmebereich Materialabschnitte zum Einschneiden eines Innengewindes aufweist. Das Kunststoffmaterial kann mit Zusatzstoffen verstärkt sein, beispielsweise mit (Glas-) Fasern.

Alternativ hierzu ist der Aufnahmebereich aus einem Sinterwerkstoff, beispielsweise aus einer Keramik hergestellt. Auch hier ist es bevorzugt, wenn der gesamte Grundkörper einschließlich des Aufnahmebereichs aus demselben Werkstoff hergestellt ist.

Bei einer bevorzugten Ausführungsform ist vorgesehen, dass die Stange ein metrisches Außengewinde zum Einschrauben in den Aufnahmebereich und/oder zur Verbindung mit einem Fassadenelement oder mit einem Fassadenelementhalter aufweist. Diese Art der Befestigung der Stange an dem Grundkörper eignet sich besonders gut für Grundkörper, die einen Aufnahmebereich mit einem metrischen Innengewinde aufweisen, welches vorzugsweise durch einen Gewindeeinsatz, insbesondere aus Metall, bereitgestellt ist. Das freie Ende der Stange kann ebenfalls ein metrisches Außengewinde aufweisen.

Das freie Ende der Stange kann jedoch auch anders gestaltet sein. Insbesondere ist es nicht erforderlich, dass zur Verbindung mit dem Fassadenelement oder mit dem Fassadenelementhalter ein metrisches Außengewinde vorgesehen ist. Das freie Ende kann beispielsweise auch ein rundes oder mehreckiges Profil aufweisen.

Bei einer besonders bevorzugten Ausführungsform der Erfindung ist vorgesehen, dass die Stange ein selbstschneidendes Außengewinde zum Einschrauben in den Aufnahmebereich aufweist. Bei einer solchen Stange handelt es sich vorzugsweise um eine Stockschraube. Diese weist einenends ein selbstschneidendes Gewinde und anderenends ein metrisches Gewinde auf. Dies ermöglicht eine einfache und zuverlässige Fixierung der Stange an den Grundkörper und eine universal nutzbare Befestigungsmöglichkeit am freien Ende der Stange.

Bevorzugt ist es ferner, wenn der Befestigungsabschnitt mindestens eine, vorzugsweise zwei Aussparungen aufweist, durch welche hindurch jeweils mindestens ein Befestigungselement zur Befestigung des Grundkörpers an der Wand einführbar ist, wobei in einem eingeführten Vormontage-Zustand des Befestigungselements das Fußteil parallel zu der Anlagefläche bewegbar ist. Dies ermöglicht eine einfache Ausrichtung des Grundkörpers an der Wand. Bei den Befestigungselementen handelt es sich insbesondere um Schrauben, welche mit in der Wand angeordneten Dübeln zusammenwirken.

Vorzugsweise ist die mindestens eine Aussparung langlochförmig, so dass eine Vorzugsrichtung zur Ausrichtung des Grundkörpers parallel zu der Wand vorgegeben wird.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Figur 1: eine perspektivische Ansicht einer Ausführungsform eines Grundkörpers;
- Figur 2: eine perspektivische Ansicht einer Ausführungsform einer Verbindungseinrichtung mit einem Grundkörper gemäß Figur 1;
- Figur 3: eine perspektivische Ansicht einer weiteren Ausführungsform eines Grundkörpers; und
- Figur 4: eine perspektivische Ansicht einer weiteren Ausführungsform einer Verbindungseinrichtung mit einem Grundkörper gemäß Figur 3.

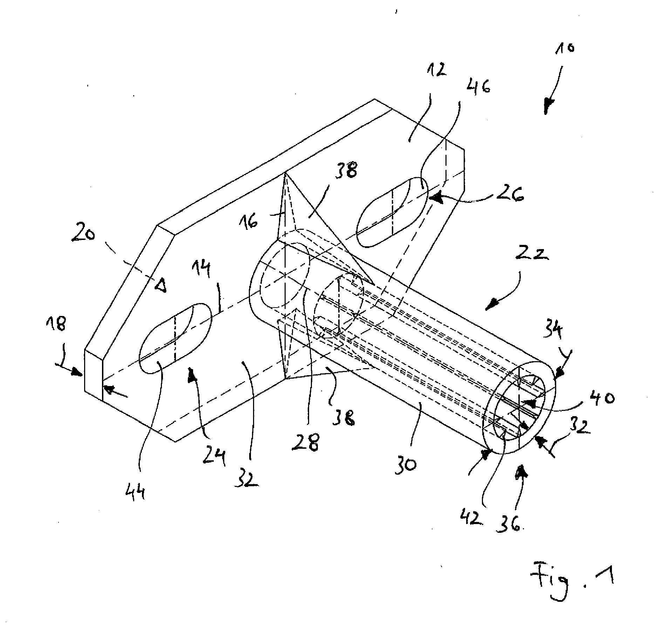

In der Figur 1 ist eine Ausführungsform eines Grundkörpers dargestellt und insgesamt mit dem Bezugszeichen 10 bezeichnet.

Der Grundkörper 10 weist ein plattenförmiges Fußteil 12 auf, welches sich in Breitenrichtung entlang einer Achse 14 und in Höhenrichtung entlang einer Achse 16 erstreckt. Eine Dicke 18 des Fußteils 12 beträgt beispielsweise zwischen ungefähr 3 mm und ungefähr 20 mm.

Das Fußteil 12 weist eine rückwärtige Anlagefläche 20 auf, die zur Anlage an eine Wandfläche einer Wand dient. Die Anlagefläche 20 ist beispielsweise im Wesentlichen rechteckförmig oder (wie in Figur 1 dargestellt) achteckigförmig.

Bevorzugt ist es, dass das Fußteil 12 entlang der Achse 14 gesehen länger ist als entlang der Achse 16. Dies ermöglicht es, entlang der Achse 14 gesehen, ein Kopfteil 22 zwischen einem ersten Befestigungsabschnitt 24 und einem zweiten Befestigungsabschnitt 26 anzuordnen.

Der Kopfteil 22 erstreckt sich entlang einer Achse 28, welche quer, insbesondere senkrecht, zu den Achsen 14 und 16 verläuft.

Insbesondere ist der Grundkörper 10 bezogen auf eine durch die Achsen 16 und 28 aufgespannte Ebene spiegelsymmetrisch.

Der Kopfteil 22 weist einen im Wesentlichen hohlzylindrischen Kopfteilabschnitt 30 auf, welcher ausgehend von einer Vorderseite 32 des Fußteils 12 von diesem abragt.

Der Kopfteilabschnitt 30 weist eine Zylindermanteldicke 32 von beispielsweise zwischen ungefähr 3 mm und ungefähr 15 mm auf.

Ein Außendurchmesser 34 des Kopfteilabschnitts 30 beträgt beispielsweise zwischen ungefähr 10 mm und ungefähr 50 mm.

Der Kopfteilabschnitt 30 erstreckt sich ausgehend von der Vorderseite 32 des Fußteils 12 in Richtung auf ein freies Ende 36 entlang einer Länge von beispielsweise zwischen ungefähr 30 mm und ungefähr 120 mm.

Bevorzugt ist es, wenn der Kopfteil 22 und der Fußteil 12 miteinander einstückig ausgebildet sind. Dies kann beispielsweise dadurch erreicht werden, dass der Grundkörper in einem Spritzgussverfahren aus einem Kunststoffmaterial, beispielsweise aus Polyamid, hergestellt ist.

Zur Verbesserung der Biegesteifigkeit sind im Bereich der Verbindung zwischen dem Kopfteil 22 und dem Fußteil 12 dreieckförmige Versteifungen 38 vorgesehen. Diese sind vorzugsweise auf einander gegenüberliegende Seiten des Kopfteilabschnitts 30 angeordnet und insbesondere durch zu der Achse 28 parallele Achsen und durch die Achse 16 aufgespannt, sodass durch Gewichtskräfte erzeugte Biegemomente aufgenommen werden können.

Der Kopfteil 22 weist einen im Wesentlichen zylindrischen Aufnahmebereich 40 auf, welcher nach radial außen von dem Kopfteilabschnitt 30 begrenzt ist. Der Aufnahmebereich 40 erstreckt sich zumindest entlang eines Teilbereichs des Kopfteilabschnitts 30 entlang der Achse 28.

Der Aufnahmebereich 40 weist eine Mehrzahl von Materialabschnitten 42 auf. Diese sind an der Innenseite des Kopfteilabschnitts 30 vorgesehen und vorzugsweise entlang eines Umfangs regelmäßig verteilt angeordnet. Die Materialabschnitte 42 weisen vorzugsweise ein dreieckförmiges Profil auf, wobei die Dreiecksspitzen nach radial innen in Richtung auf die Achse 28 weisen. Die Materialabschnitte 42 sind einstückig mit dem Kopfteilabschnitt 30 ausgebildet.

Die Befestigungsabschnitte 24 sind jeweils in Form von Aussparungen 44 beziehungsweise 46 des Fußteils 12 ausgebildet. Die Aussparungen 44 und 46 sind vorzugsweise umfangsseitig geschlossen und insbesondere langlochförmig. Die Langlöcher erstrecken sich vorzugsweise entlang der Achse 14.

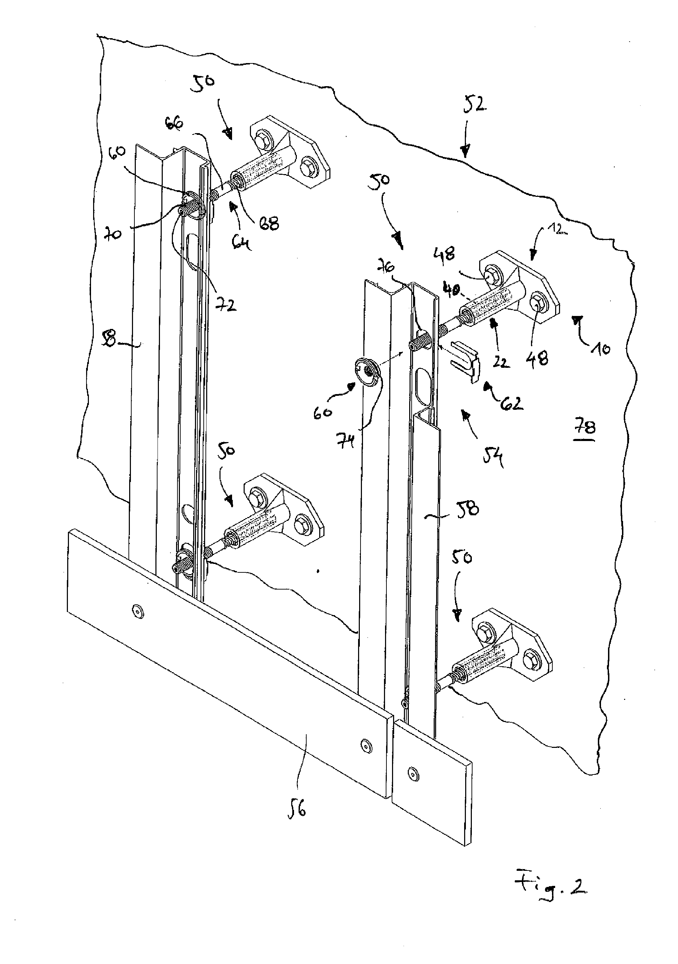

Die Aussparungen 44 und 46 dienen zur Einführung von Befestigungselementen 48 (vergleiche Figur 2).

In Figur 2 ist eine Ausführungsform einer Verbindungseinrichtung 50 in vierfacher Ausführung dargestellt. Die Verbindungseinrichtung 50 dient zur Verbindung einer Wand 52 mit einem Fassadenelementhalter 54, welcher zur Befestigung eines Fassadenelements 56 dient. Der Fassadenelementhalter 54 umfasst Tragprofile 58, welche in vertikaler Richtung verlaufen können (wie in der Zeichnung dargestellt). Alternativ hierzu verlaufen die Tragprofile 58 in horizontaler Richtung.

Der Fassadenelementhalter 54 umfasst ferner ein Gewindeelement 60 sowie einen Gewindeelementhalter 62.

Die Verbindungseinrichtung 50 umfasst eine Stange 64, welche insbesondere als Stockschraube 66 ausgebildet ist. Die Stockschraube 66 weist einenends ein selbstschneidendes Außengewinde 68 auf und anderenends ein metrisches Außengewinde 70. Das selbstschneidende Gewinde 68 ist in den Aufnahmebereich 40 des Kopfteils 22 einschraubbar. Hierbei zerschneiden die Gewindegänge des Gewindes 68 die Materialabschnitte 42, so dass die Stockschraube 66 an dem Grundkörper 10 fixiert ist.

Zum Einschrauben des Gewindes 68 in den Aufnahmebereich 40 ist am freien Ende der Stockschraube 66 ein Werkzeugaufnahmeabschnitt 72 vorgesehen, welcher beispielsweise zur Aufnahme eines Sechskantschlüssels dient.

Das Gewindeelement 60 kann auf das metrische Gewinde 70 der Stockschraube 66 aufgeschraubt werden. Zur Fixierung an dem Tragprofil 58 weist das Gewindeelement 60 eine Nut 74 auf, welche in eine Durchbrechung 76 des Tragprofils 58 einführbar ist. Im eingeführten Zustand des Gewindeelements 60 wird dieses durch Aufschieben des Gewindeelementshalters 62 in die Nut 74 an dem Tragprofil 58 fixiert. Hierbei ist das Gewindeelement 60 relativ zu dem Tragprofil 58 drehbar.

Das Gewindeelement 60 wird mit dem metrischen Gewinde 70 der Stange 64 verschraubt. Hierdurch wird die Verbindung zwischen der Verbindungseinrichtung 50 und dem Fassadenelementhalter 54 hergestellt. Durch Drehen des Gewindeelements 60 und/oder der Stange 64 ist es möglich, den Abstand des Fassadenelementhalters 54 zu einer Wandfläche 78 der Wand 52 einzustellen ("Tiefenjustierung").

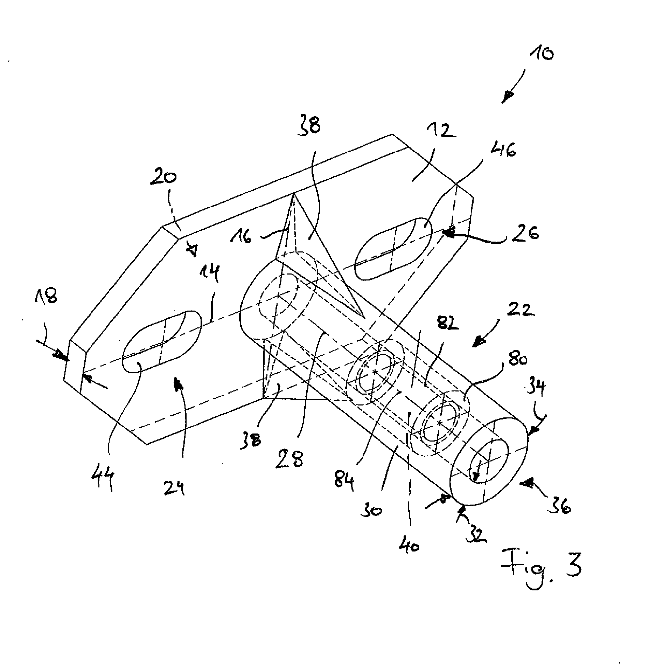

In Figur 3 ist eine weitere Ausführungsform eines Grundkörpers 10 dargestellt. Dieser weist einen zu dem unter Bezugnahme auf Figur 1 beschriebenen Grundkörper 10 vergleichbaren Aufbau auf. Daher wird im Folgenden lediglich auf die Unterschiede zwischen den in den Figuren 1 und 3 dargestellten Grundkörpern 10 eingegangen.

Der in Figur 3 dargestellte Grundkörper 10 weist keine Materialabschnitte 42 auf, welche zum Einschneiden eines Gewindes dienen. Vielmehr umfasst der Gewindekörper 10 gemäß Figur 3 einen in den Kopfteil 22 integrierten Gewindeeinsatz 80. Der Gewindeeinsatz 80 weist ein Innengewinde 82 auf. Eine Gewindeachse 84 des Gewindeeinsatzes 80 ist kolliniar zu der Achse 28 des Kopfteils 22.

Der Gewindeeinsatz 80 ist insbesondere aus einem metallischen Werkstoff hergestellt. Beispielsweise handelt es sich um eine Gewindebuchse oder um einen gewendelten Einsatz aus Draht (beispielsweise "Helicoil"-Einsätze der Firma Böllhoff, Bielefeld, Deutschland).

Bevorzugt ist es, wenn der Gewindeeinsatz 80 in das Material des Kopfteilabschnitts 30 eingebettet ist.

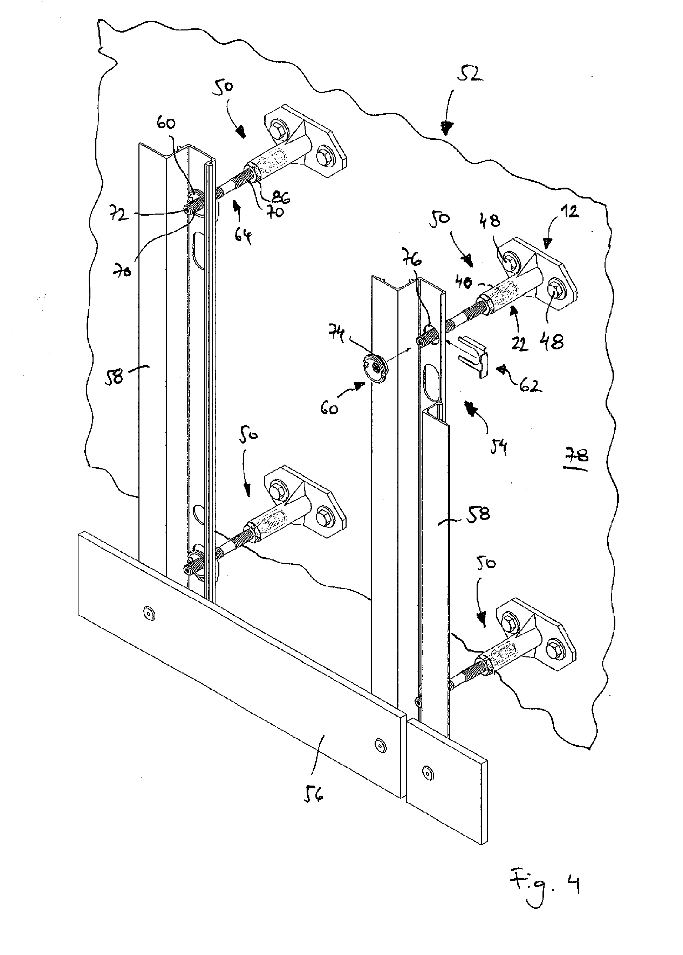

Zur Verbindung des Grundkörpers 10 mit dem Fassadenelementhalter 54 (vergleiche Figur 4) wird eine Stange 64 verwendet, welche zumindest an ihrem in den Aufnahmebereich 40 einschraubbaren Ende ein metrisches Außengewinde 70 aufweist. Zur Fixierung der Stange 64 an dem Grundkörper 10 ist eine Kontermutter 86 vorgesehen, welche an dem freien Ende 36 des Kopfteilabschnitts 30 anliegt.

Im Übrigen wird hinsichtlich des Aufbaus und der Funktionsweise des Grundkörpers 10 gemäß Figur 3 und der Verbindungseinrichtung 50 gemäß Figur 4 auf die Beschreibung zu den Figuren 1 und 2 Bezug genommen.

## Patentansprüche

1. Verbindungseinrichtung (50) zur Verbindung einer Wand (52) mit einem Fassadenelement (56) oder mit einem Fassadenelementhalter (54), umfassend einen Grundkörper (10), welcher ein Fußteil (12) mit mindestens einer Anlagefläche (20) zur Anlage gegen eine Wandfläche (78) und mit mindestens einem Befestigungsabschnitt (24, 26) zur Befestigung des Fußteils (12) an der Wand (52) aufweist, und welcher einen von dem Fußteil abragenden Kopfteil (22) aufweist, **dadurch gekennzeichnet, dass** der Kopfteil (22) mindestens einen Aufnahmebereich (40) zur Aufnahme einer in den Aufnahmebereich (40) einschraubbaren oder eingeschraubten Stange (64) aufweist, welche mit dem Fassadenelement (56) oder dem Fassadenelementhalter (54) verbunden oder verbindbar ist.

2. Verbindungseinrichtung (50) nach Anspruch 1, **dadurch gekennzeichnet, dass** der Aufnahmebereich (40) mit einem Innengewinde (82) versehen ist.

3. Verbindungseinrichtung (50) nach Anspruch 1 oder 2, **dadurch gekennzeichnet, dass** der Aufnahmebereich (40) Materialabschnitte (42) zum Einschneiden eines Innengewindes (82) mittels eines Außengewindes (68) der Stange (64) aufweist.

4. Verbindungseinrichtung (50) nach Anspruch 3, **dadurch gekennzeichnet, dass** in die Materialabschnitte (42) mittels des Außengewindes (68) der Stange (64) ein Innengewinde (82) eingeschnitten ist.

5. Verbindungseinrichtung (50) nach einem der voranstehenden Ansprüche, **dadurch gekennzeichnet, dass** der Aufnahmebereich (40) einen von dem Grundkörper (10) separat bereitgestellten Gewindeeinsatz (80) umfasst.

6. Verbindungseinrichtung (50) nach Anspruch 5, **dadurch gekennzeichnet, dass** der Gewindeeinsatz (80) zumindest abschnittsweise von dem Material, aus dem der Grundkörper (10) hergestellt ist, umschlossen ist.

7. Verbindungseinrichtung (50) nach einem der voranstehenden Ansprüche, **dadurch gekennzeichnet, dass** zumindest alle Bereiche des Grundkörpers (10) außerhalb des Aufnahmebereichs (40) aus einem Kunststoffmaterial hergestellt sind.

8. Verbindungseinrichtung (50) nach einem der Ansprüche 1 bis 6, **dadurch gekennzeichnet, dass** zumindest alle Bereiche des Grundkörpers (10) außerhalb des Aufnahmebereichs (40) aus einem Sinterwerkstoff hergestellt sind.

9. Verbindungseinrichtung (50) nach einem der voranstehenden Ansprüche, **dadurch gekennzeichnet, dass** der Aufnahmebereich (40) aus einem Kunststoffmaterial hergestellt ist.

10. Verbindungseinrichtung (50) nach einem der Ansprüche 1 bis 8, **dadurch gekennzeichnet, dass** der Aufnahmebereich (40) aus einem Sinterwerkstoff hergestellt ist.

11. Verbindungseinrichtung (50) nach einem der voranstehenden Ansprüche, **dadurch gekennzeichnet, dass** die Stange (64) ein metrisches Außengewinde (70) zum Einschrauben in den Aufnahmebereich (40) und/oder zur Verbindung mit einem Fassadenelement (56) oder mit einem Fassadenelementhalter (54) aufweist.

12. Verbindungseinrichtung (50) nach einem der voranstehenden Ansprüche, **dadurch gekennzeichnet, dass** die Stange (64) ein selbstschneidendes Außengewinde (68) zum Einschrauben in den Aufnahmebereich (40) aufweist.

13. Verbindungseinrichtung (50) nach einem der voranstehenden Ansprüche, **dadurch gekennzeichnet, dass** der Befestigungsabschnitt (24, 26) mindestens eine, vorzugsweise zwei Aussparungen (44, 46) aufweist, durch welche hindurch jeweils mindestens ein Befestigungselement (48) zur Befestigung des Grundkörpers (10) an der Wand (52) einführbar ist, wobei in einem eingeführten Vormontage-Zustand des Befestigungselements (48) das Fußteil (12) parallel zu der Anlagefläche (20) bewegbar ist.

14. Verbindungseinrichtung nach Anspruch 13, **dadurch gekennzeichnet, dass** die mindestens eine Aussparung (44, 46) langlochförmig ist.
